**Europäisches Patentamt**

**European Patent Office**

**Office européen des brevets**

(11) Numéro de publication : **0 643 545 A1**

# DEMANDE DE BREVET EUROPEEN

(21) Numéro de dépôt : **94402004.9**

(22) Date de dépôt : **08.09.94**

(51) Int. Cl.⁶ : **H04Q 7/38**

(30) Priorité : **10.09.93 FR 9310788**

(43) Date de publication de la demande :
**15.03.95 Bulletin 95/11**

(84) Etats contractants désignés :
**AT BE CH DE DK ES FR GB IT LI NL SE**

(71) Demandeur : **ALCATEL MOBILE
COMMUNICATION FRANCE
10, rue de la Baume
F-75008 Paris (FR)**

(72) Inventeur : **De Seze, Fabrice
11, Cite de Pusy
F-75017 Paris (FR)**
Inventeur : **Gourgue, Frederic
33, Rue Rennequin
F-75017 Paris (FR)**

(74) Mandataire : **Pothet, Jean Rémy Emile Ludovic
et al
c/o SOSPI
14-16 rue de la Baume
F-75008 Paris (FR)**

(54) **Procédé de détermination, par une station mobile d'un système de radiocommunications cellulaire à plusieurs types de cellules, du type de la cellule à laquelle elle est rattachée.**

(57) La présente invention concerne un procédé de détermination, dans un système de radiocommunications cellulaire à plusieurs types de cellules, du type de la cellule à laquelle est rattachée une station mobile, caractérisé en ce qu'il comporte les opérations suivantes :

— émission par le réseau de gestion du système, à destination de la station mobile, d'un message, dit message de reconnaissance, sous la forme d'une sinusoïde dont la fréquence, dite de reconnaissance, est décalée par rapport à une fréquence dite de référence, connue ou déterminable par la station mobile, le décalage, éventuellement nul, entre la fréquence de référence et la fréquence de reconnaissance étant caractéristique du type de la cellule,

— détermination par la station mobile de la fréquence de reconnaissance,

— détermination par la station mobile du décalage entre la fréquence de référence et la fréquence de reconnaissance,

— détermination par la station mobile du type de la cellule à partir du décalage déterminé.

EP 0 643 545 A1

La présente invention concerne un procédé de détermination, par une station mobile, du type de la cellule à laquelle elle est rattachée, dans un système de radiocommunications cellulaire à plusieurs types de cellules. L'invention se rapporte également à une station mobile et à une station de base pour la mise en oeuvre d'un tel procédé.

De manière générale, on appelle système de radiocommunications cellulaire soit un système simple comme le système GSM, le système DECT, le système DCS 1800, etc..., soit un système plus complexe regroupant plusieurs systèmes simples.

Dans certains systèmes simples de radiocommunications cellulaires, à l'étude à l'heure actuelle, on prévoit d'utiliser plusieurs types de cellules. Chaque type de cellule peut être caractérisé par exemple par un débit binaire distinct, une modulation distincte, un codage distinct, une structure des paquets de données (ou bursts) distincte, un traitement du signal en bande de base différent, etc... C'est le cas notamment des systèmes dits de troisième génération (futurs systèmes de radiocommunications).

L'utilisation de différents types de cellules permet d'adapter l'interface sur l'air entre les stations mobiles et le réseau de gestion du système à la situation et à l'environnement de chaque cellule. Par exemple, certaines modulations sont plus adaptées que d'autres lorsqu'une station mobile se trouve à l'intérieur d'un bâtiment, ou encore des débits plus faibles sont préférables dans les cellules de grand diamètre, etc...

De ce fait, il est essentiel qu'une station mobile rattachée à une cellule donnée, c'est-à-dire se trouvant à la portée de la station émettrice/réceptrice de base de cette cellule et susceptible d'échanger avec cette dernière des signaux constitués de données de signalisation ou de données utiles, de parole ou autres, soit capable de déterminer le plus rapidement et le plus simplement possible le type de cette cellule, afin de connaître ses caractéristiques et donc de pouvoir effectivement échanger des signaux.

Les systèmes actuels de radiocommunications ne comportent qu'un seul type de cellule. Le problème de la détermination du type de cellule ne se pose donc pas dans ces systèmes.

Or on comprend bien qu'une telle détermination est essentielle dans les futurs systèmes de radiocommunications à plusieurs types de cellules.

Par ailleurs, on envisage actuellement de développer des stations mobiles capables de se connecter à différents systèmes simples de radiocommunications cellulaires formant un système complexe, ces différents systèmes utilisant en général chacun des cellules de caractéristiques distinctes de sorte que le système complexe est un système à plusieurs types de cellules.

Les stations mobiles se connectant à de tels systèmes doivent également être capables de déterminer le type de la cellule dans laquelle elles se trouvent.

Le but de la présente invention est de mettre au point un procédé permettant à une station mobile de déterminer simplement et rapidement le type de la cellule dans laquelle elle se trouve.

La présente invention propose à cet effet un procédé de détermination, dans un système de radiocommunications cellulaire à plusieurs types de cellules, du type de la cellule à laquelle est rattachée une station mobile, caractérisé en ce qu'il comporte les opérations suivantes :

- émission par le réseau de gestion dudit système, à destination de ladite station mobile, d'un message de signalisation, dit message de reconnaissance, sous la forme d'une sinusoïde dont la fréquence, dite de reconnaissance, est décalée par rapport à une fréquence dite de référence, connue ou déterminable par ladite station mobile, le décalage, éventuellement nul, entre ladite fréquence de référence et ladite fréquence de reconnaissance étant caractéristique du type de ladite cellule,
- détermination par ladite station mobile de ladite fréquence de reconnaissance,
- détermination par ladite station mobile du décalage entre ladite fréquence de référence et ladite fréquence de reconnaissance,
- détermination par ladite station mobile du type de ladite cellule à partir dudit décalage déterminé.

Grâce à ce procédé, la station mobile peut déterminer le type de la cellule en calculant le décalage entre deux fréquences, cette opération étant simple et rapide et ne nécessitant pas l'implantation de moyens supplémentaires au niveau de la station mobile.

En outre, et de façon très avantageuse, pour exploiter un message se trouvant sous la forme d'une sinusoïde et notamment déterminer la fréquence de cette dernière, il n'est pas nécessaire pour la station mobile de connaître les caractéristiques de la cellule (type de modulation, de codage, type des bursts, etc...).

Selon une caractéristique additionnelle, le message de reconnaissance est contenu dans un message dit de synchronisation en fréquence émis par le réseau à destination de la station mobile pour lui permettre de se synchroniser en fréquence sur la fréquence balise de la cellule à laquelle elle est rattachée.

Le message de synchronisation en fréquence, utilisé de manière générale dans la plupart des systèmes de radiocommunications cellulaires, est l'un des premiers messages de signalisation à être recherchés par la station mobile. Grâce à l'invention, cette dernière peut ainsi déterminer les caractéristiques de la cellule à laquelle elle est rattachée avant toute autre opération nécessitant leur connaissance.

Par ailleurs, le message de reconnaissance peut être émis par exemple par la station émettrice/réceptrice de base de la cellule. La fréquence de référence est de préférence la fréquence balise de la cellule (la fréquence balise véhicule notamment des messages de signalisation).

On rappelle que, de manière classique dans les systèmes de radiocommunications cellulaires, la station mobile est toujours capable de déterminer la fréquence balise de la cellule à laquelle elle est rattachée à partir du message de synchronisation en fréquence (on verra comment plus loin).

Selon un mode de réalisation possible, lorsque la modulation appliquée par le réseau au message de reconnaissance, avant sa mise sur porteuse et son émission sous forme de sinusoïde, est du type GMSK (Gaussian Minimum Shift Keying), ce message est constitué avant modulation d'une séquence de bits tous égaux entre eux ; dans le cas d'une modulation GMSK à codage différentiel, il est constitué soit d'une séquence de bits tous égaux à 0, soit d'une séquence de bits alternés.

De manière bien connue en effet, la modulation GMSK de ces séquences fournit une sinusoïde.

Dans un système de type GSM, le message de synchronisation en fréquence peut être constitué d'un burst FCB (Frequency Correction Burst) émis sur le canal FCCH (Frequency Correction CHannel).

Ce burst, qui constitue notamment le message de synchronisation en fréquence, et qui sert d'autre part au recalage en fréquence ultérieur de l'oscillateur interne de la station mobile, est en effet constitué d'une séquence de bits tous égaux à 0.

Avantageusement, lorsque les types de cellules diffèrent les uns des autres par les débits binaires ou symboles associés, le décalage entre la fréquence de référence et la fréquence de reconnaissance est proportionnel à ce débit.

Une station mobile pour la mise en oeuvre du procédé selon l'invention comprend des moyens pour déterminer le décalage entre la fréquence de référence et la fréquence de reconnaissance, et des moyens pour en déduire le type de cellule associé à ce décalage.

Une station de base pour la mise en oeuvre du procédé selon l'invention comprend des moyens pour émettre un message de reconnaissance distinct pour chaque type de cellule.

D'autres caractéristiques et avantages de la présente invention apparaîtront dans la description suivante de modes de mise en oeuvre du procédé selon l'invention, donnés à titre illustratif et nullement limitatif.

On prendra comme exemple de système de radiocommunications à plusieurs types de cellules un système de type GSM utilisant une modulation GMSK, dans lequel il existe trois types de cellules : les picocellules, les microcellules et les macrocellules.

Ces trois types de cellules diffèrent les uns des autres par le débit symbole utilisé (on précise que, du fait de la modulation GMSK, le débit symbole est ici égal au débit binaire). Le débit symbole des picocellules et des microcellules est de 1800 kilosymboles par seconde (ksymb/s) ; celui des macrocellules est de 450 ksymb/s.

Les microcellules peuvent différer des picocellules par exemple par la modulation, le codage, la structure des bursts, ou le traitement du signal en bande de base utilisés.

Dans les systèmes cellulaires en général, chaque station mobile est rattachée (ou affectée) à une cellule déterminée pour échanger avec le réseau de gestion du système des données (de signalisation ou utiles) sous forme de bursts par l'intermédiaire de la station émettrice/réceptrice de base de cette cellule.

Dans les systèmes à un ou plusieurs types de cellules, pour se connecter à la station de base d'une cellule, la station mobile doit notamment identifier le message de synchronisation en fréquence afin de déterminer la fréquence balise de cette cellule et se synchroniser sur cette fréquence. Dans le cas d'un système de type GSM, le message de synchronisation en fréquence est constitué du burst FCB émis sur le canal FCCH.

Le burst FCB sert en outre, ultérieurement, à effectuer la correction en fréquence de l'oscillateur interne du modulateur de la station mobile.

Par ailleurs, il existe de manière générale dans la plupart des systèmes de radiocommunications cellulaires connus à un ou plusieurs types de cellules un message de signalisation comprenant un burst dont la modulation génère une sinusoïde pure. En général, ce message est le message de synchronisation en fréquence.

C'est ainsi que, dans les systèmes de type GSM à un ou plusieurs types de cellules, comme le système pris comme exemple dans la présente description, le burst FCB est constitué d'une série de bits tous égaux à 0. Ce système utilisant une modulation GMSK, la modulation d'une séquence de bits tous égaux à 0 génère une sinusoïde pure dont la fréquence $f_s$ est donnée par la formule $f_s = f_b + \dfrac{D}{4}$, $f_b$ étant la fréquence balise et D le débit symbole utilisé.

Classiquement, pour déterminer la fréquence balise de la cellule dans laquelle elle se trouve, la station mobile recherche le burst FCB, c'est-à-dire qu'elle recherche une sinusoïde autour d'une fréquence ayant les deux caractéristiques suivantes : elle appartient à un ensemble fini contenant les fréquences balises des cellules appartenant à la zone dans laquelle se trouve la station mobile (cet ensemble est toujours connu de la station mobile), et elle est la fréquence reçue avec le niveau le plus élevé par la station mobile.

Le canal FCCH sur lequel est émis le burst FCB étant porté, comme on l'a vu, par une fréquence décalée par rapport à la fréquence balise, la station mobile doit rechercher le burst FCB non pas sur les fréquences balises de l'ensemble fini précédent, mais dans un intervalle prédéterminé centré autour de chacune de ces fréquences balises. La station mobile, qui connaît la fréquence centrale associée à chaque intervalle, est ainsi capable de déterminer la fréquence balise de la cellule dans laquelle elle se trouve à partir de l'intervalle dans lequel elle a trouvé une sinusoïde.

Selon l'invention, on tire profit des propriétés du burst FCB, ou des messages équivalents dans les autres systèmes cellulaires, à savoir :
- sa transformation par modulation en une sinusoïde pure,
- la proportionnalité de la différence $f_s$-$f_b$ avec le débit symbole utilisé, lui-même proportionnel au débit binaire.

Ces propriétés permettent, dans l'exemple choisi, d'utiliser le burst FCB comme message de reconnaissance pour indiquer à une station mobile d'un système à plusieurs types de cellules le type de la cellule à laquelle elle rattachée.

Pour cela, la station mobile commence par effectuer la procédure habituelle décrite ci-dessus pour déterminer la fréquence balise (il n'est pas nécessaire à cet effet qu'elle connaisse le débit utilisé par la cellule, mais simplement la fréquence balise associée à chaque intervalle de recherche).

Afin d'optimiser cette procédure lorsqu'il existe un nombre fini de types de cellules, c'est-à-dire par exemple, dans l'exemple particulier choisi, un nombre fini de débits différents, il est possible de prévoir que la station mobile recherche le burst FCB non pas en continu sur tout un intervalle centré autour de chaque fréquence balise, mais autour de points discrets d'un tel intervalle, correspondant, compte tenu des débits possibles, aux fréquences porteuses possibles du FCCH, c'est-à-dire aux fréquences de reconnaissance possibles.

Cette procédure comporte toujours nécessairement, comme on l'a vu plus haut, une étape de détermination de la fréquence porteuse du FCCH.

Il suffit donc à la station mobile d'effectuer ensuite la différence entre la fréquence porteuse du FCCH (fréquence de reconnaissance) et la fréquence balise (fréquence de référence) pour déterminer le type de la cellule à laquelle elle est rattachée. On utilise ainsi une information déjà disponible dans les systèmes existants.

Dans le cas de l'exemple choisi, la différence $f_s$-$f_b$ est égale à 450 kHz pour les picocellules et les microcellules, et à 112,5 kHz pour les macrocellules.

Le fait d'effectuer la différence entre la fréquence de référence et la fréquence de reconnaissance ne nécessite pas de modification matérielle au niveau de la station mobile.

En effet, on rappelle que, notamment lors de l'exploitation classique du burst FCB pour la correction de fréquence, la station mobile doit effectuer la différence entre la fréquence sur laquelle son oscillateur interne trouve le FCCH, c'est-à-dire la fréquence de la sinusoïde du FCB, et la fréquence sur laquelle il devrait le trouver (on rappelle que la station mobile, à ce stade, connaît le débit utilisé et peut donc déduire de la fréquence de la sinusoïde du FCB la fréquence sur laquelle elle doit se recaler).

La station mobile possède donc des moyens adaptés pour effectuer de telles opérations, de sorte que la mise en oeuvre de l'invention ne pose pas de problème.

Pour l'exploitation du décalage ainsi déterminé par la station mobile, il faut toutefois d'une part modifier le logiciel de pilotage de cette dernière de sorte qu'il pilote avant toute autre opération le calcul de la différence $f_s$-$f_b$, et d'autre part prévoir dans la station mobile une table de correspondance entre les décalages $f_s$-$f_b$ et les débits symboles (ou plus généralement un algorithme permettant de déterminer le type de cellule à partir de ce décalage).

On comprend bien que les modifications impliquées par l'invention sont des modifications logicielles simples et donc peu coûteuses.

On remarque, dans l'exemple choisi avec la modulation GMSK, que lorsque deux types de cellules ont le même débit, et diffèrent donc par une autre caractéristique, la distinction ne peut être effectuée par la station mobile à l'aide du burst de type FCB puisque la sinusoïde a la même fréquence si les débits sont égaux.

Dans un tel cas, on peut prévoir, par exemple pour les picocellules, de remplacer le burst FCB classique par un burst constitué d'une séquence de bits tous égaux à 1. Dans ce cas, on obtient toujours une sinusoïde après la modulation GMSK, mais sa fréquence, notée $f'_s$, est donnée par la formule : $f'_s = f_b - \dfrac{D}{4}$.

Lorsque la modulation utilisée est du type GMSK à codage différentiel, on remplace le burst FCB classique par un burst constitué d'un séquence alternée 01010101.... On obtient alors après modulation une sinusoïde de fréquence $f'_s$.

Dans de telles situations, on modifie donc légèrement la procédure au niveau du réseau, puisque l'on utilise un burst FCB modifié.

De manière très avantageuse, le procédé selon l'invention n'est pas affecté par la dérive en fréquence de l'oscillateur de la station mobile. En effet, la dérive maximale tolérée est en général d'environ $10^{-6}$ fois la fréquence porteuse.

Pour une fréquence balise de 2 GHz par exemple, la dérive maximale est donc de 2 kHz. Compte tenu de la valeur des décalages à observer (de l'ordre de la centaine de kHz), elle est négligeable et ne perturbe pas les mesures.

Pour ce qui est de l'influence de l'effet Doppler, la dérive en fréquence à une vitesse de 500 km/h (lorsque la station mobile est à bord d'un train à grande vitesse par exemple) atteint 926 Hz.

La dérive totale en fréquence (dérive en fréquence de l'oscillateur et effet Doppler) est donc voisine de 3 kHz, ce qui est négligeable dans l'exploitation des mesures.

Les autres types d'imperfections ayant pour conséquence une dérive en fréquence n'entraînent pas non plus de perturbation préjudiciable des mesures.

De manière générale, l'écart entre les décalages caractéristiques de deux types de cellules quelconques doit être suffisant pour éviter toute ambiguïté due à la dérive en fréquence de l'oscillateur local ou à l'effet Doppler au niveau de la station mobile.

On vient de décrire les deux seuls types de séquences permettant d'obtenir, avec une modulation GMSK, l'émission de sinusoïdes.

Lorsque les types de cellules diffèrent les uns des autres par leur débit binaire (ou symbole), la modulation GMSK, à codage différentiel ou non, est tout à fait adaptée. On a vu que dès que deux types de cellules ont le même débit binaire, on peut encore les distinguer grâce à une modulation de type GMSK en employant la deuxième séquence possible pour générer une sinusoïde (c'est-à-dire en inversant le sens de rotation de la modulation sur le cercle trigonométrique). Lorsque plus de deux types de cellules, ou tous les types de cellules, ont le même débit, il n'est plus possible d'utiliser une modulation de type GMSK pour déterminer le type de cellule.

Toutefois, on peut toujours trouver une modulation fournissant un nombre suffisant de séquences générant des sinusoïdes pour permettre la distinction de tous les types de cellules.

Par exemple, dans la modulation 4 QAM, les quatre symboles de la modulation sont 00 (noté $S_1$), 01 (noté $S_2$), 11 (noté $S_3$) et 10 (noté $S_4$).

Une séquence constituée d'une suite de symboles identiques génère une sinusoïde ayant une fréquence égale à la fréquence de référence (dans le cas du FCCH, cette fréquence est la fréquence balise).

Une séquence constituée de la suite $S_1S_2S_3S_4$ génère une sinusoïde dont la fréquence est décalée par rapport à la fréquence balise de D/4, D étant toujours le débit symbole.

Une séquence constituée de l'alternance $S_1S_3$ ou $S_2S_4$ génère une sinusoïde dont la fréquence est décalée par rapport à la balise de D/2.

Enfin, une séquence constituée de la suite $S_1S_4S_3S_2$ génère une sinusoïde dont la fréquence est décalée par rapport à la balise de - D/4.

Il est ainsi possible de reconnaître quatre types de cellules ayant le même débit et différant par une ou plusieurs caractéristiques.

Bien entendu, l'invention n'est pas limitée au mode de mise en oeuvre qui vient d'être décrit.

En premier lieu, comme cela vient d'être montré par le deuxième exemple de modulation, le procédé selon l'invention est indépendant du type de modulation utilisé. En effet, c'est l'utilisation d'un message se trouvant sous la forme d'une sinusoïde qui est essentielle dans l'invention. Une telle sinusoïde peut être exploitée par la station mobile alors que cette dernière ne connaît pas les caractéristiques de la cellule à laquelle elle a été rattachée.

Le message de reconnaissance n'est donc pas nécessairement constitué d'un message de synchronisation en fréquence.

Lorsque le message de reconnaissance est un message de synchronisation en fréquence, et lorsque la fréquence de référence est la fréquence balise, le décalage entre la fréquence de référence et la fréquence de reconnaissance doit être tel que la fréquence de reconnaissance se trouve toujours dans un intervalle autour de la fréquence de référence prédéterminé et connu de la station mobile, pour que cette dernière puisse déterminer la fréquence de référence.

De manière générale, on choisit la modulation de sorte qu'il existe, pour chaque type de cellule, une séquence distincte générant l'émission d'une sinusoïde dont la fréquence est telle que le décalage avec la fréquence de référence est caractéristique du type de cellule.

En outre, il n'est pas nécessaire que la fréquence de référence soit la fréquence balise. Elle peut prendre toute valeur connue au préalable ou déterminable par la station mobile.

Il n'est pas non plus nécessaire que la fréquence de référence prise en compte par la station mobile pour déterminer le décalage soit la fréquence porteuse du message de reconnaissance.

Le procédé selon l'invention peut être utilisé dans tout système de radiocommunications cellulaire à plusieurs types de cellules, et également de manière très avantageuse en relation avec des terminaux multi-modes capables de fonctionner dans des systèmes complexes comprenant plusieurs systèmes simples de radiocommunications cellulaires.

Enfin, on pourra remplacer tout moyen par un moyen équivalent sans sortir du cadre de l'invention.

## Revendications

**1/** Procédé de détermination, dans un système de radiocommunications cellulaire à plusieurs types de cellules, du type de la cellule à laquelle est rattachée une station mobile,
caractérisé en ce qu'il comporte les opérations suivantes :

- émission par le réseau de gestion dudit système, à destination de ladite station mobile, d'un message de signalisation, dit message de reconnaissance, sous la forme d'une sinusoïde dont la fréquence, dite de reconnaissance, est décalée par rapport à une fréquence dite de référence, connue ou déterminable par ladite station mobile, le décalage, éventuellement nul, entre ladite fréquence de référence et ladite fréquence de reconnaissance étant caractéristique du type de ladite cellule,
- détermination par ladite station mobile de ladite fréquence de reconnaissance,
- détermination par ladite station mobile du décalage entre ladite fréquence de référence et ladite fréquence de reconnaissance,
- détermination par ladite station mobile du type de ladite cellule à partir dudit décalage déterminé.

2/ Procédé selon la revendication 1 caractérisé en ce que ledit message de reconnaissance est contenu dans un message dit de synchronisation en fréquence émis par ledit réseau à destination de ladite station mobile pour lui permettre de se synchroniser en fréquence sur la fréquence balise de ladite cellule.

3/ Procédé selon l'une des revendications 1 ou 2 caractérisé en ce que ladite fréquence de référence est la fréquence balise de ladite cellule.

4/ Procédé selon l'une des revendications 1 à 3 caractérisé en ce que ledit message de reconnaissance est émis par la station émettrice/réceptrice de base de ladite cellule.

5/ Procédé selon l'une des revendications 1 à 4 caractérisé en ce que, la modulation appliquée par ledit réseau audit message de reconnaissance, avant sa mise sur porteuse et son émission sous forme de sinusoïde, étant du type GMSK, ledit message de reconnaissance est constitué avant modulation d'une séquence de bits tous égaux entre eux.

6/ Procédé selon l'une des revendications 1 à 4 caractérisé en ce que, la modulation appliquée par ledit réseau audit message de reconnaissance avant sa mise sur porteuse et son émission sous forme de sinusoïde, étant du type GMSK à codage différentiel, ledit message de reconnaissance est constitué avant modulation d'une séquence de bits tous égaux à 0 ou d'une séquence de bits alternés.

7/ Procédé selon la revendication 1 à 6 caractérisé en ce que, dans un système de type GSM, ledit message de reconnaissance est constitué d'un burst FCB émis sur le canal FCCH.

8/ Procédé selon l'une des revendications 1 à 7 caractérisé en ce que, lorsque les types de cellules diffèrent les uns des autres par les débits binaires ou symboles associés, ledit décalage est proportionnel audit débit.

9/ Station mobile appartenant à un système de radiocommunications cellulaire, caractérisée en ce qu'elle est adaptée à la mise en oeuvre du procédé selon l'une des revendications 1 à 8.

10/ Station mobile selon la revendication 9 caractérisée en ce qu'elle comprend des moyens pour déterminer le décalage entre ladite fréquence de référence et ladite fréquence de reconnaissance et des moyens pour en déduire le type de cellule associé audit décalage.

11/ Station de base appartenant à un système de radiocommunications cellulaire, caractérisée en ce qu'elle est adaptée à la mise en oeuvre du procédé selon l'une des revendications 1 à 8.

12/ Station de base selon la revendication 11 caractérisée en ce qu'elle comprend des moyens pour émettre un message de reconnaissance distinct pour chaque type de cellule.

**Office européen des brevets**

## RAPPORT DE RECHERCHE EUROPEENNE

Numero de la demande

EP 94 40 2004

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO-A-92 11706 (MOTOROLA) <br> * abrégé * <br> --- | 1 | H04Q7/38 |
| A | US-A-5 119 397 (DAHLIN ET AL.) <br> * colonne 2, ligne 45 - colonne 3, ligne 23 * <br> ----- | 1 | |

**DOMAINES TECHNIQUES RECHERCHES (Int.Cl.6)**

H04Q

Le présent rapport a été établi pour toutes les revendications

| Lieu de la recherche | Date d'achèvement de la recherche | Examinateur |
|---|---|---|
| LA HAYE | 25 Novembre 1994 | Janyszek, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant